# EUROPEAN PATENT APPLICATION

(11) **EP 1 571 527 A1**
(43) Date of publication of application: **07.09.2005**
(21) Application number: 05250757.1
(22) Date of filing: 10.02.2005
(51) Int. Cl.: G06F 1/00

(54) **System and method for providing anti-virus program using wireless communication terminal**

(30) Priority: 10.02.2004 KR 2004008764
(71) Applicant: Curitel Communications, Inc., Kyoungki-do 467-860 (KR)
(72) Inventor: Jang, Joon Young, Ichon-shi Kyoungki-do 467-860 (KR); Jung, Chang Soo, Ichon-shi Kyoungki-do 467-860 (KR)
(74) Representative: Mounteney, Simon James

(57) **Abstract**

A system and a method for providing an anti-virus program by using a wireless communication terminal is disclosed. The system includes: the wireless communication terminal storing an anti-virus program and a boot program and transferring the anti-virus program and the boot program to the computer by receiving a request from the computer; and the computer for being booted by recognizing the wireless communication terminal as a master boot device based on a setting of the basic input output system (BIOS), reading the anti-virus program from the wireless communication terminal and performing the anti-virus program.

## Description

### Field of the Invention

The present invention relates to a system and a method for providing an anti-virus program by using a wireless communication terminal; and, more particularly, to a system and a method for providing an anti-virus program by storing an anti-virus program and a boot program downloaded from an anti-virus program server in a wireless communication terminal and performing the anti-virus program in a computer by using the anti-virus program and the boot program stored in the wireless communication terminal.

### Description of Related Arts

A wireless communication terminal includes a mobile communication terminal, a personal communication station (PCS), a personal digital assistance (PDA), a smart phone, a next generation mobile communication terminal capable of handling data based on an international mobile telecommunication (IMT)-2000 and a wireless local area network terminal.

A computer virus is a set of intrusive executable files causing grate harm to files or other programs stored in a computer by modifying executable files and replicating itself in the modified files.

Recently, there have been huge number of computer viruses existed in the world and a spreading speed of the computer virus is incredibly fast because of rapid development of a network technology. For protecting a computer from the computer virus, an anti-virus program has been introduced.

The anti-virus program generally maintains a list of known computer viruses by regularly updating the list from a provider of the anti-virus program. Based on the list of known computer viruses, the anti-virus program eliminates the known computer viruses by scanning a memory or mess storage of the computer to identify the known computer viruses and isolating the identified computer viruses. As mentioned above, the anti-virus program cannot protect the computer from un-known computer viruses or newly discovered computer viruses which are not in the list of known computer viruses. Accordingly, the anti-virus program needs to regularly download the list of known computer virus for including newly discovered computer viruses in the list of known computer viruses in order to protect the computer from the newly discovered computer viruses.

Furthermore, in order to uses the anti-virus program for detecting and eliminating the computer virus, the anti-virus program may be downloaded from the provider through a network to a computer virus infected computer or copied from other computer by using a second memory device such as floppy disk. Also, a floppy disk storing the anti-virus program and a boot program is used for detecting and eliminating the computer virus by booting the computer virus infected computer with the boot program and eliminating the computer viruses.

However, the anti-virus program may be infected by the computer virus while downloading the anti-virus program through the network. Also, the anti-virus program could not be downloaded through network to the virus infected computer since the computer virus may disable functions of using the network. Therefore, there are many difficulties to provide the anti-virus program to the virus infected computer for detecting and eliminating the computer viruses. In case of using the second memory device for providing the anti-virus program, it is also hard and annoying to maintain the list of known computer viruses with newly discovered computer viruses in the second memory device.

### Summary of the Invention

It is, therefore, an object of the present invention to provide a system and a method for identifying and eliminating computer viruses by downloading and storing a boot program and an anti-virus program to a wireless communication terminal and using the boot program and the anti-virus program stored in the wireless communication terminal.

In accordance with an aspect of the present invention, there is provided a wireless communication terminal for detecting and eliminating computer viruses in a system for providing an anti-virus program by using the wireless communication terminal, the wireless communication terminal including: an input unit for receiving a request signal of downloading an anti-virus program from a user; a storing unit for storing a anti-virus program and a boot program; a controller for downloading the anti-virus program and the boot program according to the request signal, storing the anti-virus program and the boot program in the storing unit, and transferring the anti-virus program and the boot program to an external computer by receiving a request from the external computer; and a connector for providing a communication connection between the wireless communication terminal and the external computer in order to transfer the anti-virus program and the boot program stored in the storing unit to the external computer.

In accordance with another aspect of the present invention, there is provided a computer for detecting and eliminating computer viruses by using a wireless communication terminal in a system for providing an anti-virus program by using the wireless communication terminal, the computer including: an input unit for receiving a request of performing an anti-virus program; a storing unit for permanently storing a basic input output system (BIOS) providing an option to set the wireless communication terminal as a master boot device; a controller for recognizing the wireless communication terminal as the master boot device based on the BIOS, booting the computer by using a boot program stored in the wireless communication terminal, reading the anti-virus program stored in the wireless communication terminal and performing the anti-virus program; and a connector for providing a communication connection between the wireless communication terminal and the computer in order to receive the anti-virus program and the boot program stored in the wireless communication terminal.

In accordance with still another aspect of the present invention, there is provided a system for providing an anti-virus program by using a wireless communication terminal in order to detect and eliminate a computer virus in a computer, the system including: the wireless communication terminal storing an anti-virus program and a boot program and transferring the anti-virus program and the boot program to the computer by receiving a request from the computer; and the computer for being booted by recognizing the wireless communication terminal as a master boot device based on a setting of the basic input output system (BIOS), reading the anti-virus program from the wireless communication terminal and performing the anti-virus program.

In accordance with further still another aspect of the present invention, there is provided a method for providing an anti-virus program by using a wireless communication terminal in order to detect and eliminate a computer virus in a computer, the method including the steps of: a) setting the computer to recognize a storing unit of the wireless communication terminal as a master boot device; b) booting the computer by reading a boot program stored in the storing unit of the wireless communication terminal; c) reading an anti-virus program stored in the storing unit of the wireless communication terminal and loading the anti-virus program in the computer; and d) detecting and eliminating computer viruses in the computer by performing the loaded anti-virus program.

In accordance with further still another aspect of the present invention, there is provided a computer system including: a basic input output system (BIOS) for recognizing a wireless communication terminal as a master boot device; a controller for recognizing the wireless communication terminal as the master boot device according to the BIOS and booting the computer system by using a boot program stored in the wireless communication terminal; and a connector for providing a communication connection to transfer the boot program from the wireless communication terminal to the controller.

### Brief Description of the Drawings

The above and other objects and features of the present invention will become better understood with regard to the following description of the preferred embodiments given in conjunction with the accompanying drawings, in which:
Fig. 1 is a diagram illustrating a system for providing an anti-virus program by using a wireless communication terminal in accordance with a preferred embodiment of the present invention;
Fig. 2 is a diagram showing a wireless communication terminal 11 in Fig. 1;
Fig. 3 is a diagram showing a computer 12 in Fig. 1; and
Fig. 4 is a flowchart for explaining a method for providing an anti-virus program by using a wireless communication terminal in accordance with a preferred embodiment of the present invention.

### Detailed Description of the Invention

Hereinafter, a system and a method for providing an anti-virus program by using a wireless communication terminal in accordance with a preferred embodiment of the present invention will be described in more detail with reference to the accompanying drawings.

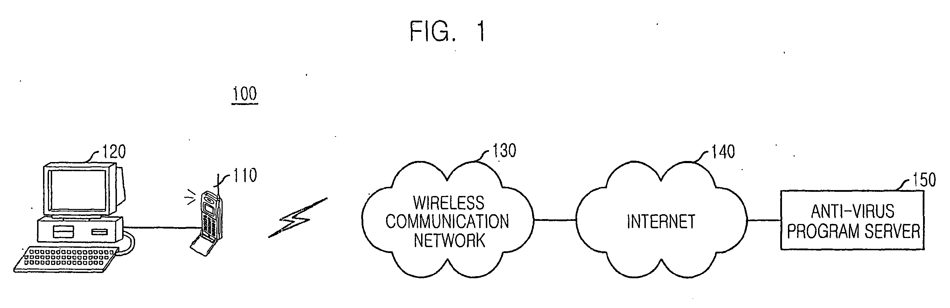

Fig. 1 is a diagram illustrating a system for providing an anti-virus program by using a wireless communication terminal in accordance with a preferred embodiment of the present invention.

As shown, the system 100 includes a wireless communication terminal 110 and a computer 120. The wireless communication terminal 110 is connected to a computer 120 through a communication link by using a connector such as USB port. The wireless communication terminal 110 downloads an anti-virus program from an anti-virus program server 150 through a wireless communication network 130 and the Internet 140, and stores the downloaded anti-virus program in a storing unit of the wireless communication terminal 110. In this preferred embodiment of the present invention, the anti-virus program server 150 is connected to the wireless communication network 130 through the Internet 140. However, it can be directly connected to the wireless communication network 130 without the Internet 140.

When the computer 120 is infected by computer viruses, a user of the computer 120 powers the computer 12 down and reboots the computer 120 to set a basic input output system (BIOS) for recognizing the storing unit of the wireless communication terminal 110 as a master boot device. For recognizing the storing unit, a driver for recognizing the storing unit of the wireless communication terminal 110 must be pre-installed into the computer 120. Furthermore, the BIOS must be modified to provide options to set the storing unit of the wireless communication terminal 120 as a master boot device or a slave boot device.

The BIOS is a set of essential software routine that test hardware at startup, start an operation system and support the transfer of data among hardware devices. That is, the BIOS is a lowest level of operating system including a set of routines that control input/output devices and peripheral devices. The BIOS includes a start-up routine, a service processing routine and a hardware interrupt processing routine. The startup routine is automatically performed when a computer is turned on (Power-On Self Test POST) for testing a state of the computer and initializing an operating system. During initializing the operating system, the startup routine determines what kinds of peripheral devices are connected to the computer.

When the computer 120 is rebooted by setting the BIOS to recognize the storing unit of the wireless communication terminal 110 as the master boot device, the computer 120 recognizes the storing unit of the wireless communication terminal as the master boot device and a hard disk of the computer 120 as a slave device and is booted based on a boot program stored in the storing unit of the wireless communication terminal. And, the computer 120 loads an anti-virus program stored in the storing unit of the wireless communication terminal 110 into a random access memory (RAM) of the computer 120. After loading the anti-virus program, the anti-virus program is performed for identifying the computer viruses by scanning a memory or a mess storage device of the computer 120, isolating the identified computer viruses and eliminating the isolated computer virus. After eliminating the computer viruses in the computer 120, the BIOS is re-set to recognize the hard disk of the computer 120 as the master boot device.

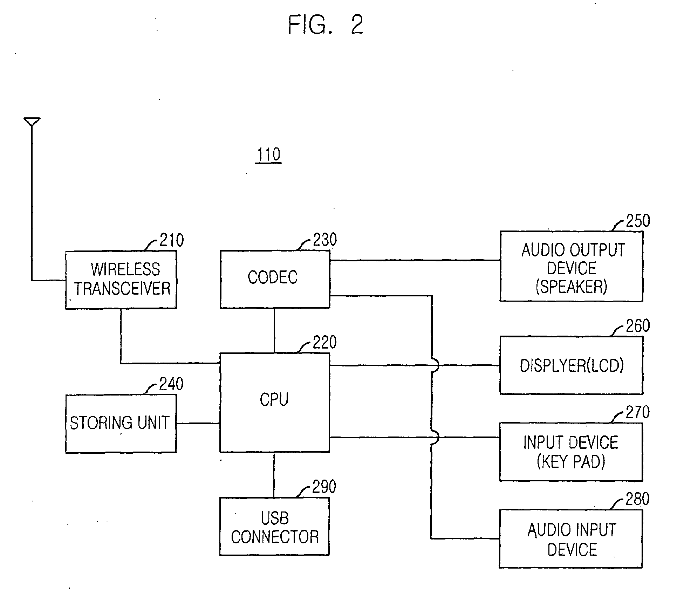

Fig. 2 is a diagram showing a wireless communication terminal 110 in Fig. 1.

Referring to Fig. 2, the wireless communication terminal 110 includes a wireless transceiver 210, a central processing unit (CPU) 220, a compression/decompression (CODEC) 230, a storing unit 240, an audio output device 250, a displayer (LCD) 260, an input device (key pad) 270, an audio input device 280 and a universal serial but (USB) connector 290.

The wireless transceiver 210 receives and transmits signals through an antenna.

The CPU 220 generally controls operations of the wireless communication terminal 120. Also, the controller 220 controls operations for downloading an anti-virus program and a boot program through a wireless communication network according to a request signal for downloading the anti-virus program, which is inputted from the input device (key pad) 270 and storing the downloaded anti-virus program in a storing unit 240. Furthermore, the CPU 220 controls operations to transmit the anti-virus program stored in the storing unit 240 to the computer 120 through a USB connector 290 for eliminating the computer virus in the computer 120.

The CODEC 230 converts a receiving signal from the wireless transceiver 210 to a voice signal and outputs the voice signal to audio output device (speaker) 250. The CODEC 230 also converts the voice signal received from an audio input device (mike) 280 to a transmitting signal to be transmitted to the transceiver 210.

The storing unit 240 stores programs driving the wireless communication terminal, file systems including images, characters and icons, the anti-virus program download form the anti-program server and the boot program.

The audio output device (speaker) 250 outputs the voice signal from the CODEC 230.

The displayer (LCD) 260 displays data according to the CPU 220.

The input device (key pad) 270 is an interface between the wireless communication terminal and a user for receiving key inputs from the user.

The audio input device (mike) 280 receives the voice signal from a user and transmits the received voice signal to the CODEC 230.

The USB connector 290 provides a communication link between the wireless communication terminal 110 and the computer 120 by using a universal serial bus (USB). The anti-virus program and the boot program are transferred to the computer 120 through the USB connector 290.

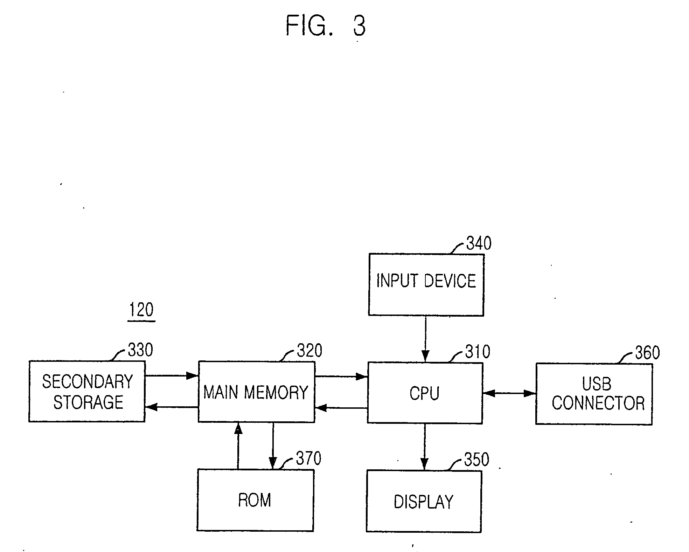

Fig. 3 is a diagram showing a computer 120 in Fig. 1.

As shown in Fig. 3, the computer 120 includes a central processing unit (CPU) 310, a main memory 320, a secondary storage 330, an input device 340, a display 350, a universal serial bus (USB) connector 360 and a read only memory (ROM) 370.

The CPU 310 generally manages operations of the computer 120. Also, the CPU 310 controls operations for reading an anti-virus program stored in a storing unit of the wireless communication terminal, loading the anti-virus program in the main memory 320 through an USB connector 360, and performing the anti-virus program for detecting and eliminating the computer viruses in the storing unit 330.

The secondary storage 330 stores mess amount of data.

The input device 340 receives a request for performing the anti-virus program or any other orders from a user.

The display 350 displays data for a user based on a control of the CPU 310.

The USB connector 360 provides a communication link by using a universal serial bus (USB) between the computer 120 and the wireless communication terminal 110 in order to transfer the boot program and the anti-virus program from the wireless communication terminal 110 to the computer 120

The read only memory (ROM) 370 stores a basic input output system (BIOS) which provides an option to set a storing unit of the wireless communication terminal 120 as a master boot device.

When the computer 120 is booted, the CPU 110 recognizes the storing unit of the wireless communication terminal 120 as the master boot device according to the BIOS stored in the ROM 370. The computer 120 is not limited to a personal computer (PC). It can be any electric device having functions similar to the PC and having possibilities to be infected by the computer viruses such as a personal data assistance (PDA) and a wireless communication terminal. For example, a virus infected first wireless communication terminal can be connected to a second wireless communication terminal storing the anti-virus program. And the virus infected first wireless communication terminal loads and performs the anti-virus program stored in the second wireless communication terminal for detecting and eliminating computer viruses in the virus infected first wireless communication terminal.

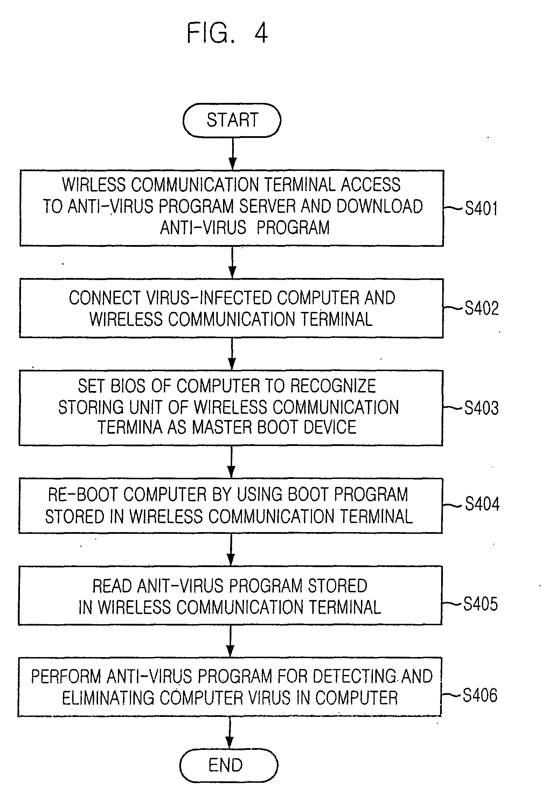

Fig. 4 is a flowchart for explaining a method for providing an anti-virus program by using a wireless communication terminal for detecting and eliminating computer viruses in a computer in accordance with a preferred embodiment of the present invention.

As shown in Fig. 4, a wireless communication terminal access to an anti-virus program server through a wireless communication network according to a request from a user and download an anti-virus program and a boot program from the anti-virus program server at step S401. Moreover, the anti-virus program and the boot program can be downloaded from any computers storing the anti-virus program and the boot program by establishing a communication link between to the wireless communication terminal and the computers.

The boot program is normally not be updated in regular basis and however, the anti-virus program is updated in regular basis for updating information of newly discovered computer virus. Furthermore, when the wireless communication terminal receives the request for downloading the anti-virus program from a user, the wireless communication terminal firstly checks whether the anti-virus program is stored in a storing unit of the wireless communication terminal. If the anti-virus program is stored in the storing unit, the wireless communication terminal compares a version of the stored anti-virus program and a version of an anti-virus program currently provided from the anti-virus program server. If the version of the stored anti-virus program is prior to the anti-virus program of the anti-virus program server, the anti-virus program of the anti-virus program is newly downloaded and stored in the storing unit of the wireless communication terminal. If not, the stored anti-virus program is maintained.

After storing the anti-virus program of a recent version and the boot program in the storing unit of the wireless communication terminal, the wireless communication terminal and a virus infected computer are connected by using a connecting unit such as a universal serial bus (USB) at step S402.

Also, a basic input output system (BIOS) of the virus infected computer is set to recognize the storing unit of the connected wireless communication terminal as a master boot device at step S403. For recognizing the storing unit of the connected wireless communication terminal as the master boot device, a driver for recognizing the storing unit must be previously installed in the virus infected computer. Furthermore, the storing unit 24 of the wireless communication terminal may be automatically recognized as the master boot device by using the USB device for connecting the wireless communication terminal and the virus infected computer.

The virus infected computer reads the boot program stored in the storing unit of the wireless communication terminal, loads the boot program in a random access memory (RAM) and is rebooted by the boot program at step S404.

After booting, the anti-virus program stored in the storing unit of the wireless communication terminal is read from the storing unit of the wireless communication terminal and loads the anti-virus program to the random access memory (RAM) of the virus infected computer at step S405. The anti-virus program stored in the RAM is executed and the viruses are detected and eliminated from a secondary storage of the virus infected computer at step S406, wherein the secondary storage includes the hard disk and is set as a slave device.

After eliminating the viruses from the virus infected computer, the BIOS is reset to recognize the secondary storage of the computer as the master boot device by automatically or manually rebooting the computer.

As mentioned above, the present invention provides an easy and simple system and method for detecting and eliminating computer viruses by downloading the anti-virus program in the storing unit of the wireless communication terminal and providing the anti-virus program to the virus infected computer.

Furthermore, the present invention provides an easy and simple system and method for updating the anti-virus program with newly discovered virus by downing the anti-virus program in the storing unit of the wireless communication terminal.

The present invention contains subject matter related to Korean patent application No. KR 2004-0078477, filed in the Korean patent office on February 10, 2004, the entire contents of which being incorporated herein by reference.

While the present invention has been described with respect to certain preferred embodiments, it will be apparent to those skilled in the art that various changes and modifications may be made without departing from the spirit and scope of the invention as defined in the following claims.

## Claims

1. A wireless communication terminal for detecting and eliminating computer viruses in a system for providing an anti-virus program by using the wireless communication terminal, the wireless communication terminal comprising:
means for receiving a request signal of downloading an anti-virus program from a user;
means for storing a anti-virus program and a boot program;
means for downloading the anti-virus program and the boot program according to the request signal, storing the anti-virus program and the boot program in the storing means, and transferring the anti-virus program and the boot program to an external computer by receiving a request from the external computer; and
means for providing a communication connection between the wireless communication terminal and the external computer in order to transfer the anti-virus program and the boot program stored in the storing means to the external computer.

2. A computer for detecting and eliminating computer viruses by using a wireless communication terminal in a system for providing an anti-virus program by using the wireless communication terminal, the computer comprising:
means for receiving a request of performing an anti-virus program;
means for permanently storing a basic input output system (BIOS) providing an option to set the wireless communication terminal as a master boot device;
means for recognizing the wireless communication terminal as the master boot device based on the BIOS, booting the computer by using a boot program stored in the wireless communication terminal, reading the anti-virus program stored in the wireless communication terminal and performing the anti-virus program; and
means for providing a communication connection between the wireless communication terminal and the computer in order to receive the anti-virus program and the boot program stored in the wireless communication terminal.

3. A system for providing an anti-virus program by using a wireless communication terminal in order to detect and eliminate a computer virus in a computer, the system comprising:
the wireless communication terminal storing an anti-virus program and a boot program and transferring the anti-virus program and the boot program to the computer by receiving a request from the computer; and
the computer for being booted by recognizing the wireless communication terminal as a master boot device based on a setting of the basic input output system (BIOS), reading the anti-virus program from the wireless communication terminal and performing the anti-virus program.

4. The system of claim 3, wherein the wireless communication terminal includes:
a first input means for receiving a request signal of downloading an anti-virus program from a user;
a first storing means for storing the anti-virus program and the boot program which are downloaded through a wireless communication network;
a first controlling means for downloading the anti-virus program and the boot program according to the request signal of the first input means, storing the anti-virus program and the boot program in the storing means, and transferring the anti-virus program and the boot program to the computer by receiving a request from the computer; and
a first connecting means for providing a communication connection between the wireless communication terminal and the computer in order to transfer the anti-virus program and the boot program stored in the first storing means to the computer.

5. The system of claim 4, wherein the computer includes:
a second input means for receiving a request of performing an anti-virus program;
a second storing means for storing data;
a second connecting means for providing a communication connection between the computer and the wireless communication terminal;
a non volatile storing means for permanently storing a basic input output system (BIOS) to set the first storing means of the wireless communication terminal, which is connected to the computer through the second connecting means, as a master boot device; and
a second controlling means for recognizing the first storing means as the master boot device based on the BIOS, booting the computer by using a boot program stored in the first storing means, reading the anti-virus program stored in the first storing means and performing the anti-virus program.

6. A method for providing an anti-virus program by using a wireless communication terminal in order to detect and eliminate a computer virus in a computer, the method comprising the steps of:
a) setting the computer to recognize a storing unit of the wireless communication terminal as a master boot device;
b) booting the computer by reading a boot program stored in the storing unit of the wireless communication terminal;
c) reading an anti-virus program stored in the storing unit of the wireless communication terminal and loading the anti-virus program in the computer; and
d) detecting and eliminating computer viruses in the computer by performing the loaded anti-virus program.

7. The method of Claim 6, wherein in the step a), a basic input output system (BIOS) of the computer is set to recognize the storing unit of the wireless communication terminal as the master boot device.

8. The method of claim 6, wherein in the step a), the computer automatically recognizes the storing unit of the wireless communication terminal as the master boot device by recognizing the storing unit as a USB memory device by connecting the computer to the wireless communication terminal through a universal serial bus (USB).

9. A computer system comprising:
a basic input output system (BIOS) for recognizing a wireless communication terminal as a master boot device;
means for recognizing the wireless communication terminal as the master boot device according to the BIOS and booting the computer system by using a boot program stored in the wireless communication terminal; and
means for providing a communication connection to transfer the boot program from the wireless communication terminal to the controlling means.
